Europäisches Patentamt

(19) European Patent Office

Office européen des brevets

(11) Numéro de publication : **0 024 239**
**B1**

(12) **FASCICULE DE BREVET EUROPÉEN**

(45) Date de publication du fascicule du brevet :
23.05.84

(51) Int. Cl.³ : **B 64 F   1/02**

(21) Numéro de dépôt : 80401163.3

(22) Date de dépôt : 07.08.80

(54) Dispositif pour le relevage du filet d'une barrière pour l'arrêt des avions.

(30) Priorité : 09.08.79 FR 7920397

(43) Date de publication de la demande :
25.02.81 Bulletin 81/08

(45) Mention de la délivrance du brevet :
23.05.84 Bulletin 84/21

(84) Etats contractants désignés :
DE GB SE

(56) Documents cités :
BE-A-   698 898
FR-A- 1 559 957
FR-A- 2 321 423
US-A- 2 854 201

(73) Titulaire : **AERAZUR EFA**
**58, Boulevard Galliéni**
**F-92130 Issy les Moulineaux (FR)**

(72) Inventeur : **Alavoine, Jacques**
**81 route de Saint Germain Villiers Saint Frédéric**
**F-78640 Neauphle le Château (FR)**
Inventeur : **Contensou, Claude**
**7, rue de la Mare**
**F-75020 Paris (FR)**
Inventeur : **Hardy, Pierre**
**50, boulevard de la Paix**
**F-92400 Courbevoie (FR)**
Inventeur : **Neveux, Francis**
**57, rue François Pinson**
**F-92320 Châtillon (FR)**

(74) Mandataire : **Collignon, Pierre et al**
**Cabinet Collignon 6, rue de Madrid**
**F-75008 Paris (FR)**

EP 0 024 239 B1

Jouve, 18, rue St-Denis, 75001 Paris, France

## Description

La présente invention se rapporte à des perfectionnements concernant le fonctionnement des systèmes de relevage des barrières d'arrêt d'avions.

Actuellement, sur les pistes d'envol ou d'atterrissage, ces systèmes d'arrêt sont pour la plupart sous la forme d'un filet se relevant devant l'avion en difficulté ou sous la forme d'un câble traversant la piste, pour les avions munis d'une crosse.

L'objet de la présente invention est de fournir plus de possibilités concernant l'emploi du système de relevage proprement dit.

Les systèmes les plus employés consistent à relever un filet posé en travers de la piste à l'aide de poteaux entraînés eux-mêmes, directement, soit par l'intermédiaire d'un câble, par un vérin télécommandé depuis la tour de contrôle ou depuis la barrière.

Ces dispositifs sont généralement constitués de plusieurs éléments indépendants sollicités chacun par des efforts importants. Leur implantation exige donc plusieurs supports disposés les uns par rapport aux autres d'une façon précise et capables d'absorber sans bouger des efforts élevés.

Par ailleurs, la fonction de descente du filet n'est pas assurée ou, si elle l'est, elle impose une consommation d'énergie.

En outre, le maintien en tension de la suspension, filet relevé, entraîne systématiquement le fluage de cette suspension et donc l'abaissement du filet.

Enfin, la conception de ces dispositifs ne permet pas leur encastrement total dans le sol pour éviter la présence d'un obstacle en extrémité de piste.

On connaît aussi, d'après le document FR-A-2 321 423, un dispositif pour le relevage du filet d'une barrière pour l'arrêt des avions, comprenant de chaque côté de la piste un bâti oblique par rapport à l'axe de celle-ci et recevant la base articulée d'un poteau pivotant qui supporte le câble de suspension du filet et qui est mû au moyen de bielles reliées à un vérin alimenté en air sous pression. Selon ce document, pour l'abaissement du filet, l'air se trouvant devant le piston du vérin est chassé dans l'autre chambre du vérin pour donner une impulsion de départ au poteau, l'air résiduel restant devant le piston servant d'amortisseur pour éviter une chute brutale du poteau sur le sol.

La présente invention a pour objet un dispositif pour le relevage d'une barrière pour l'arrêt des avions qui est constitué sous la forme d'un ensemble compact et encastrable dans le sol, qui assure l'amortissement des poteaux de support du filet en fin de mouvement de relevage tout en aidant au pivotement vers le bas de ces poteaux lors de la descente du filet, et qui permet de limiter l'abaissement de la partie supérieure du filet, en position relevée de celui-ci, dû au fluage de sa suspension.

A cet effet le dispositif selon l'invention pour le relevage du filet d'une barrière pour l'arrêt des avions comprend, de chaque côté de la piste, un bâti posé sur le sol, oblique par rapport à la piste et recevant la base articulée d'un poteau pivotant qui supporte le câble de suspension du filet (12) et qui est mû par des bielles (6) reliées à un vérin (5) alimenté en fluide sous pression, et il se caractérise en ce que le vérin comporte un piston fixe et un corps se déplaçant le long d'un chemin de guidage ménagé dans le bâti, seule la chambre du vérin située autour de la tige de piston étant reliée à l'alimentation en fluide alors que l'autre chambre du vérin est fermée pour agir comme amortisseur en fin de relevage et emmagasiner de l'énergie utilisable pour assurer la fonction de descente du poteau, ladite autre chambre du vérin étant équipée d'une soupape qui permet le maintien, dans le temps, de la contrepression à un niveau constant.

L'utilisation d'un vérin à piston fixe et corps se déplaçant sur un chemin de guidage et d'un poteau cylindrique dont l'axe de rotation est décalé par rapport à son axe de révolution permet d'obtenir un ensemble très compact qui peut se loger sur un bâti suffisamment petit pour qu'il soit « travaillant » c'est-à-dire pour qu'il compense par ses réactions la majeure partie des forces exercées sur les organes de relevage. Une telle solution supprime la nécessité d'installer sous le dispositif un massif en béton onéreux. Des ancrages simples ne faisant pas appel à du béton suffisent pour absorber les couples de renversement.

L'encastrement total du dispositif dans le sol devient alors possible pour éviter la présence d'obstacles en extrémité de piste.

Par ailleurs, l'utilisation d'un vérin à fluide alimentant l'une de ses chambres tandis que l'autre chambre est close pendant le relevage du poteau permet d'amortir le mouvement en fin de relevage et d'utiliser l'énergie excédentaire emmagasinée dans la chambre close pour pousser les poteaux vers le bas alors de la descente du filet, action indispensable en cas de vent. Cette solution évite l'installation d'un circuit télécommandé de gonflage de la chambre du vérin servant à la descente des poteaux et la consommation d'énergie pour cette phase de fonctionnement, ce qui permet éventuellement d'accroître l'autonomie du dispositif.

Suivant l'utilisation prévue du dispositif et l'énergie nécessaire au relevage du filet, la génération de pression pour le vérin est hydraulique ou pneumatique.

Un autre avantage réside dans le fait que le positionnement du bâti supportant le poteau n'est pas parallèle ou perpendiculaire à la piste mais incliné par exemple de 20° vers celle-ci ; cela permet à la tête du poteau dans son mouvement de rotation lors de son relevage de s'écarter de l'axe de la piste, donc de tendre les sangles supérieures du filet. Cette conception permet de limiter l'abaissement de la partie supérieure du filet dû au fluage de la suspension en installant une soupape sur la chambre close du vérin qui maintient la contrepression à un niveau constant après relevage.

Pour bien faire comprendre l'invention, on en a représenté un exemple d'exécution au dessin schématique annexé, dans lequel :

la figure 1 est une vue en perspective de l'ensemble d'une barrière dont le filet est au sol, en attente de relevage ; et

la figure 2 est une vue schématique d'un vérin avec son alimentation et sa vidange.

Dans l'exemple d'exécution présenté, le dispositif de relevage comprend, de chaque côté de la piste 1 d'envol ou d'atterrissage, un bâti 2 fixé sur le sol par des ancrages simples 3 supportant la génération de pression hydraulique ou pneumatique 4, le vérin 5, les bielles de poussée 6, le poteau de relevage 7 et un système de téléverrouillage 8 avec vérin auxiliaire à double effet.

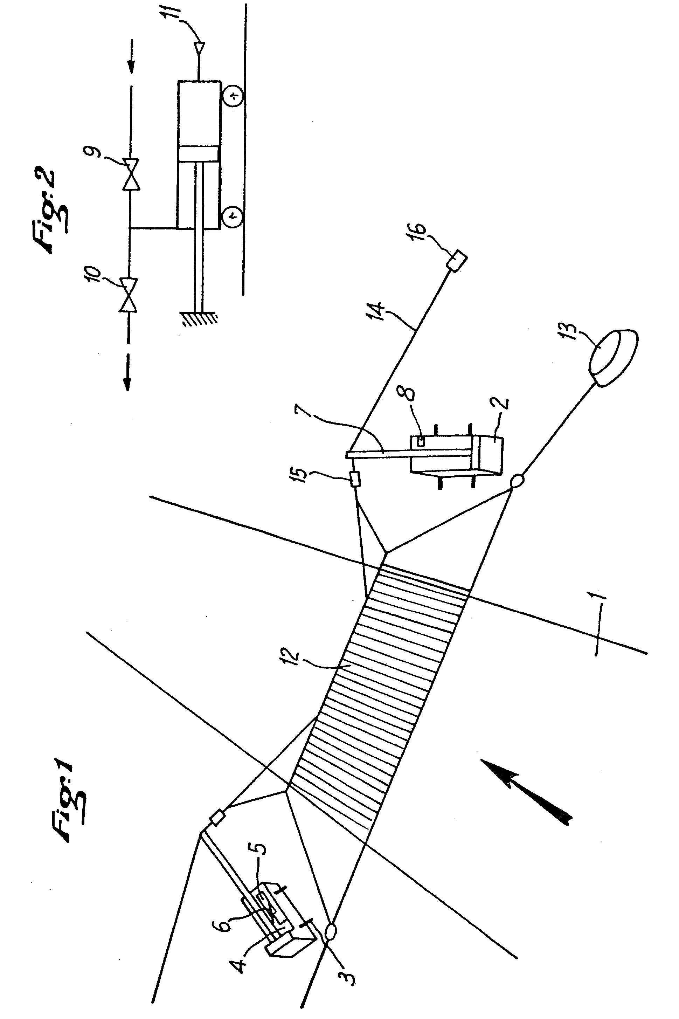

Le circuit de génération de pression pneumatique est constitué principalement (figure 2) de l'électrovanne de relevage 9, de l'électrovanne de vidange et de descente 10 et de la soupape 11.

De chaque côté de la piste, le filet 12 de la barrière d'arrêt est relié à un frein 13 et à un câble 14 par l'intermédiaire d'un libérateur 15. Ce câble 14 passe librement au travers du poteau 7 et est fixé au sol par un ancrage 16.

Seul le fonctionnement de la partie mécanique, objet de la présente invention, est décrit dans ce qui suit.

Le système d'alimentation en gaz comprimé et la commande électrique qui agit sur les électrovannes 9-10 n'ont rien de particulier en soi et ne seront donc pas expliqués dans le détail. Il suffit seulement de mentionner que les éléments de commande électrique sont situés dans une petite armoire à proximité de la barrière et qu'un pupitre dans la tour de contrôle permet de commander le relevage et la descente du filet et de contrôler l'état potentiel du dispositif.

Lorsque l'ordre de relevage est donné depuis la tour de contrôle ou l'armoire située près de la barrière, l'électrovanne 9 s'ouvre pour alimenter la chambre du vérin située autour de la tige de piston tandis que l'électrovanne de vidange 10 se ferme ; le gaz comprimé alimente alors le vérin côté tige. Le corps du vérin se déplace (vers la gauche de la figure 2) sur son chemin de guidage en entraînant les bielles de poussée 6 et le poteau 7. Ce déplacement entraîne une augmentation de la pression dans la chambre close du vérin (vers la droite de la figure 2) qui amortit le mouvement en fin de relevage. Dans le cas d'une alimentation hydraulique, le gaz est remplacé par de l'huile et un accumulateur hydro-pneumatique est nécessaire côté chambre close.

Si le filet reste suffisamment longtemps relevé pour que sa suspension flue, le point d'équilibre de l'ensemble vérin-bielles-poteau est modifié. Les volumes du circuit d'alimentation et de la chambre close sont tels que la pression de cette dernière croît très rapidement tandis que la pression d'alimentation est quasiment stable. Il s'ensuit une chute de tension dans la suspension, donc un abaissement de la partie supérieure du filet. Pour éviter cet inconvénient, une soupape 11 tarée à un niveau convenable permet de maintenir la pression dans la chambre close à une valeur constante après relevage du filet.

L'ordre de descente entraîne la fermeture de l'électrovanne 9 et l'ouverture de l'électrovanne 10 qui est équipée d'un limiteur de débit pour régler le temps de descente. La vidange de la chambre du vérin côté tige provoque la détente de la pression dans la chambre close qui force la descente du filet si un vent suffisant s'oppose à son abaissement par gravité.

Bien entendu, la présente invention n'est pas limitée à l'exemple de réalisation qui vient d'être décrit et des modifications peuvent être apportées sans s'écarter du cadre de l'invention définie par les revendications annexées.

## Revendication

Dispositif pour le relevage du filet d'une barrière pour l'arrêt des avions comprenant, de chaque côté de la piste (1), un bâti (2) posé sur le sol, oblique par rapport à la piste et recevant la base articulée d'un poteau (7) pivotant qui supporte le câble (14) de suspension du filet (12) et qui est mû par des bielles (6) reliées à un vérin (5) alimenté en fluide sous pression, caractérisé en ce que le vérin (5) comporte un piston fixe et un corps se déplaçant le long d'un chemin de guidage ménagé dans le bâti (2), seule la chambre du vérin (5) située autour de la tige de piston étant reliée à l'alimentation en fluide alors que l'autre chambre du vérin (5) est fermée pour agir comme amortisseur en fin de relevage et emmagasiner de l'énergie utilisable pour assurer la fonction de descente du poteau (7), ladite autre chambre du vérin (5) étant équipée d'une soupape (11) qui permet le maintien, dans le temps, de la contrepression à un niveau constant pour éviter un abaissement de la partie supérieure du filet (12) dû au fluage de la suspension.

## Claim

A device for raising the berrier net for arresting aircraft comprising, on each side of the track (1), a frame (2) placed on the ground, oblique with respect to the track and receiving the hinged base of a pivoting post (7) which supports the cable (14) for suspending the net (12) and which is actuated by links (6) connected to a hydraulic cylinder (7) supplied with a pressurised fluid, characterized in that the cylinder (5) comprises a fixed piston and a body moving along a guide path formed in the frame (2), only the chamber of the cylinder (5) situated about the piston rod being connected to the fluid supply whereas the other chamber of the cylinder (5) is clised so as to act as a shock absorber at the end of raising and to store the energy useable for ensuring the descending function of the post (7), said other chamber of the cylinder (5) being equipped with a valve (11) for maintaining the counter pressure, in time, at a constant level so as to avoid lowering of the upper part of the net (12) due to creeping of the suspension.

**Anspruch**

Vorrichtung zum Hochfahren eines dem Anhalten von Flugzeugen dienenden Abfangnetzes, welche beiderseits der Landebahn (1) ein auf dem Boden angeordnetes Gerüst (2) aufweist, das bezüglich der Landebahn schräg ausgerichtet ist und den angelenkten Fuß einer schwenkbaren Stange (7) aufnimmt, die das Tragseil (14) des Netzes (12) trägt und durch ein Gestänge (6) bewegbar ist, welches mit einer durch Druckfluid betätigbaren Winde (5) verbunden ist, dadurch gekennzeichnet, daß die Winde (5) einen feststehenden Kolben und einen Körper aufweist, der längs eines Führungsweges in dem Gerüst (2) verschiebbar ist, daß nur die um die Kolbenstange herum angeordnete Kammer der Winde (5) an die Fluidzuleitung angeschlossen ist, während die andere Kammer der Winde geschlossen ist, um gegen das Ende des Hochfahrens als Dämpfer zu wirken und die Energie zu speichern, die zur Sicherstellung des Absenkens der Stange (7) genutzt wird, und daß die andere Kammer der Winde (5) mit einem Ventil (11) versehen ist, daß über der Zeit die Aufrechterhaltung des Gegendruckes auf einem konstanten Niveau gestattet, um ein Absenken des oberen Teils des Netzes (12) als Folge eines Fließens der Aufhängung zu verhindern.

*Fig.1*

*Fig.2*